## Europäisches Patentamt

## European Patent Office

## Office européen des brevets

(11) Veröffentlichungsnummer: **0 154 779**
**B1**

## EUROPÄISCHE PATENTSCHRIFT

(45) Veröffentlichungstag der Patentschrift:
**18.01.89**

(51) Int. Cl.⁴: **H 01 F 7/22**, H 01 F 5/08,
H 01 F 36/00

(21) Anmeldenummer: **85100747.6**

(22) Anmeldetag: **25.01.85**

(54) **Supraleitendes Magnetsystem für den Betrieb bei 13K.**

(30) Priorität: **15.02.84 DE 3405310**

(43) Veröffentlichungstag der Anmeldung:
**18.09.85 Patentblatt 85/38**

(45) Bekanntmachung des Hinweises auf die Patenterteilung:
**18.01.89 Patentblatt 89/3**

(84) Benannte Vertragsstaaten:
**CH DE FR GB LI NL**

(56) Entgegenhaltungen:
EP-A- 0 074 030
DE-A- 1 564 722
US-A- 3 848 162

IEEE TRANSACTIONS ON MAGNETICS, vol. MAG-19, no. 3, May 1983, IEEE New York, US. M.O. HOENIG: "Design concepts for a mechanically refrigerated 13 K superconducting magnet system", Seiten 880-883
CRYOGENICS, Vol. 21, no. 4, April 1981, London, New York, Suilford. L. Klundert et al.: "Fully superconducting rectifiers and fluxpumps. Part 1: Realized methods for pumping flux", Seiten 195-206
IEEE TRANSACTIONS ON MAGNETICS, Vol. MAG-17, No. 5, September 1981, IEEE New York, US. M.A. GREEN: "Quench Protection and design of large high current density superconducting magnets", Seiten 1793-1798

(73) Patentinhaber: **BBC Brown Boveri AG, Haselstrasse, CH-5401 Baden (CH)**

(72) Erfinder: **Dustmann, Cord-Henrich, Dr. Dipl.-Phys., Diemstrasse 10, D-6940 Weinheim (DE)**

(74) Vertreter: **Kempe, Wolfgang, Dr. et al, c/o BROWN, BOVERI & CIE AG ZPT Postfach 351, D-6800 Mannheim 31 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Die Erfindung betrifft ein supraleitendes Magnetsystem der im ersten Teil des Anspruchs 1 genannten Art.

Ein derartiges Magnetsystem ist aus IEEE Transactions on Magnetics, Vol. MAG-19, No. 3, May 83, p 880 bis 883 bekanntgeworden. Es wird eine supraleitende Spule, die aus $NB_3Sn$-Leitern gefertigt ist, beschrieben. Die Spule wird im Temperaturbereich zwischen 12 und 14 K betrieben. Sie wird durch Wärmeleitung von einem zweistufigen Refrigenerator, der nach dem Gifford-Mc-Mahon-Prozess arbeitet, gekühlt. Es sind somit keine Hilfskühlflüssigkeiten erforderlich. Die tiefste erreichbare Temperatur eines solchen Kryogenerators liegt bei etwa 10 K. Bei dieser Temperatur vermag das Gerät allerdings keine nennenswerte Kälteleistung mehr zu erbringen, so dass eine Betriebstemperatur gewählt werden muss, die darüber liegt, z.B. bei 13 K. Bei dieser Temperatur trägt ein Supraleiter auf $Nb_3Sn$-Basis einen hinreichend hohen Strom, um Spulen für Magnetfelder bis 3 oder 4 T herzustellen. Auch Supraleiter auf NbCN-Basis erfüllen eine derartige Bedingung. Die Spule selbst wird thermisch an die zweite Stufe des Kryogenerators angekoppelt, während ein Kälteschild zur Reduktion der Wärmestrahlung an der ersten Stufe befestigt wird. Da kein Kühlmedium (z.B. Helium) verwendet wird, können die Stromzuführungen nicht, wie sonst üblich, abgasgekühlt werden. Sie werden isotherm an die beiden Stufen des Kryogenerators angekoppelt, so dass die Kühlung durch Wärmeleitung erfolgt. Um die Wärmeverluste möglichst klein zu halten, muss der Strom in den Stromzuführungen so klein wie möglich gehalten werden.

Bei der bekannten Lösung verbrauchen die Stromzuführungen einen wesentlichen Teil der verfügbaren Kälteleistung und begrenzen dennoch die in der Magnetspule maximal mögliche Stromdichte. Dies liegt daran, dass für die Magnetspule nicht beliebig dünne supraleitende Drähte verwendet werden können. So ist in der $Nb_3Sn$-Technik kein wirtschaftliches Verfahren bekannt, Supraleiter mit Stabilisierungskupfer und einem Durchmesser von kleiner als 0,8 mm herzustellen, weil beim Herunterziehen auf kleine Durchmesser die Gefahr der Beschädigung der erforderlichen Tantal-Diffusionsbarriere zwischen Supraleiter und Stabilisierungskupfer besteht. Das Stabilisierungskupfer ist jedoch für den sicheren Betrieb der Magnetspule notwendig. Dies führt dazu, dass die supraleitenden Drähte der Magnetspule einen relativ hohen Strom, der bei mehreren Hundert Ampere liegen kann, aufnehmen können. Ein derartig hoher Strom würde jedoch in den Zuleitungen derart hohe Wärmeverluste verursachen, dass die Kühlleistung des Kryogenerators hierfür nicht ausreichen würde.

Um trotz des durch die Stromzuführungen begrenzten Betriebsstromes ein Magnetfeld von 3 bis 4T herstellen zu können, könnte eine Magnetspule verwendet werden, die mehr Windungen aufweist, als dies aufgrund der Stromtragfähigkeit der supraleitenden Drähte erforderlich wäre. Dies führt jedoch zu einer Erhöhung des Spulengewichtes. Das Spulengewicht ist jedoch durch die Auswahl des Kryogenerators begrenzt, weil der Kaltkopf des Kryogenerators in der Lage sein muss, das Spulengewicht zu tragen und weil zudem die thermisch angekoppelte Spulenmasse in einem vernünftigen Zeitraum von z.B. 1 bis 3 Tagen abkühlbar sein kann. Dadurch ergibt sich eine Gewichtsbeschränkung für die Spule auf 50 bis 60 kg. Aus diesen Gründen ist eine optimale Auslegung der Spule nicht möglich.

Gemäss dem Stand der Technik ist der Kaltkopf des Kryogenerators in der Spulenmitte angeordnet, so dass dieser Raum als Nutzvolumen nicht mehr zur Verfügung steht. Viele Anwendungen brauchen aber den Innenraum der Spule als Nutzvolumen.

Aufgabe der Erfindung ist es, ein fertigungstechnisch möglichst einfach herzustellendes supraleitendes Magnetsystem nach dem ersten Teil des Anspruchs 1 zu schaffen, bei dem ein konzentrisch zur Magnetspule angeordneter Hohlraum vollständig als magnetischer Nutzraum verwendbar ist, die Stromtragfähigkeit des Supraleiters der Magnetspule optimal ausgenutzt werden kann und die Kälteleistung des Kryogenerators vorwiegend für die Kühlung der Magnetspule zur Verfügung steht.

Diese Aufgabe wird erfindungsgemäss durch die im Anspruch 1 gekennzeichneten Merkmale gelöst.

Aufbau und Wirkungsweise einer Flusspumpe sind in den beiden Aufsätzen in Cryogenics 21, Seiten 195 bis 206 und Seiten 267 bis 277 (1981) beschrieben. Eine derartige Flusspumpe kann im vorliegenden Fall jedoch wegen der relativ hohen Betriebstemperatur von ca. 13 K nicht unmittelbar übernommen werden. Vielmehr muss ein Supraleitungsmaterial für die Flusspumpe verwendet werden, dessen kritische Temperatur oberhalb von ca. 13 K liegt.

Durch Verwendung einer Flusspumpe mit Transformator kann beispielsweise bei einem Stromübersetzungsverhältnis von 1:100 ein Betriebsstrom von 150 Ampere erzielt werden, wodurch eine für die Spule optimale Stromdichte gewählt werden kann, während die Stormzuführungen nur einen Strom von 1,5 A tragen müssen, was einer sehr geringen thermischen Belastung des Kryogenerators durch die Stromzuführungen entspricht.

Dadurch, dass die Magnetspule von einem Metallzylinder, vorzugsweise aus Aluminium, umschlossen ist, mit dessen Aussenseite die zweite Stufe des Kryogenerators thermisch leitend verbunden ist, wird aufgrund der guten Leitfähigkeit des Aluminiums bei tiefer Temperatur die ganze Magnetspule gleichmässig gut bei minimalen Temperaturdifferenzen rundherum gekühlt. Auf diese Weise wird bei geringem Aluminiumzylindergewicht eine optimale Spulenkühlung erreicht. Die Flusspumpe ist in einem zylindrischen Aluminiumgehäuse angeordnet, welches thermisch an die zweite Stufe des Kryogenerators angekoppelt ist. Diese Massnahme ermöglicht eine gute Kühlung der Flusspumpe und vermeidet eine Erwärmung durch Wärmestrahlung.

Die Sekundärwicklung des Transformators der Flusspumpe ist aus dem gleichen supraleitenden Draht oder Seil wie die Magnetspule hergestellt. Dabei hat der Draht eine aussenliegende Kupferstabilisierung (Kupferbeschichtung). Der Draht der Sekundärwicklung und der Draht der Magnetspule werden hinsichtlich ihres Durchmessers optimal auf die erforderliche Stromstärke ausgelegt.

Für die Auslegung der Flusspumpe werden vorteilhafte Ausgestaltungen der Erfindung vorgeschlagen:

1. Die Primärwicklung des Transformators der Flusspumpe wird aus sehr dünnem Nb$_3$Sn-Draht gefertigt. Beispielsweise ist die Drahtstärke 0,1 mm. Dies ist möglich, da wegen der sehr geringen Energie, die in der Primärwicklung gespeichert werden muss, auf eine Kupferstabilisierung des supraleitenden Drahtes verzichtet werden kann.

2. Zwischen den Wicklungslagen der Primär- und/oder Sekundärwicklung des Transformators der Flusspumpe sind Wärmedränagen (heatdrains), insbesondere isolierte Kupferdrähte, gelegt, die thermisch an die zweite Stufe des Kryogenerators angekoppelt sind. Hierdurch ist eine intensive Kühlung des Transformators gewährleistet. Durch Verwendung von Kupferdrähten, die z.B. parallel zur Spulenachse ausgerichtet sind, jedoch in keinem elektrischen Kontakt zueinander stehen, können Wirbelstromverluste, die z.B. bei Verwendung von Wärmedränageblechen auftreten, vermieden werden.

3. Wenigstens einer der supraleitenden Schalter ist aus dem gleichen supraleitenden Material wie die Magnetspule hergestellt. Im Bereich des Schalters ist das Stabilisierungskupfer entfernt (z.B. weggeätzt). In diesem Bereich ist eine Schalterheizung, z.B. in Form einer Konstantanheizwicklung, angeordnet. Mit «Bereich des Schalters» ist der Drahtabschnitt gemeint, der durch Heizung von dem supraleitenden in den normalleitenden Zustand übergeht, wobei sich der Widerstand derart erhöht, dass kein nennenswerter Stromfluss erfolgen kann.

4. Im Bereich des Schalters ist das Stabilisierungskupfer durch elektrisch hochresistives Material zur Erhöhung der Wärmekapazität ersetzt. Ein derartiges Material ist beispielsweise eine Kupfernickellegierung. Das Aufbringen des hochresistiven Materials kann beispielsweise elektrolytisch erfolgen.

5. Die Sekundärwicklung und wenigstens ein supraleitender Schalter der Flusspumpe sind aus einem durchgehenden supraleitenden Draht gefertigt. Auf diese Weise kann auf eine Kontakt- bzw. Lötstelle zwischen Sekundärwicklung und supraleitendem Schalter verzichtet werden. Die Herstellung kann in der Weise erfolgen, dass die Sekundärwicklung des Trafos gewickelt wird und ein Ende aus der Wicklung herausgezogen wird. An diesem freien Ende wird die Kupferstabilisierung in einem Bereich entfernt und gegebenenfalls durch ein elektrisch hochresistives Material ersetzt. Ferner wird an diesem Bereich die Schalterheizung angebracht.

6. Die Sekundärwicklung, wengistens ein supraleitender Schalter der Flusspumpe und die Magnetspule sind aus einem durchgehenden supraleitenden Draht oder Seil gefertigt. Bei dieser Lösung kann gegenüber der unter Punkt 5 genannten Lösung auf eine weitere Kontakt- oder Lötstelle verzichtet werden. Die Magnetspule und die Sekundärwicklung werden aus einem durchgehenden Draht oder Seil gewickelt. In dem Bereich, der zwischen der Magnetspule und der Sekundärwicklung liegt, wird die Kupferstabilisierung entfernt und eine Schalterheizung angebracht. Dieser Bereich dient dann als supraleitender Schalter.

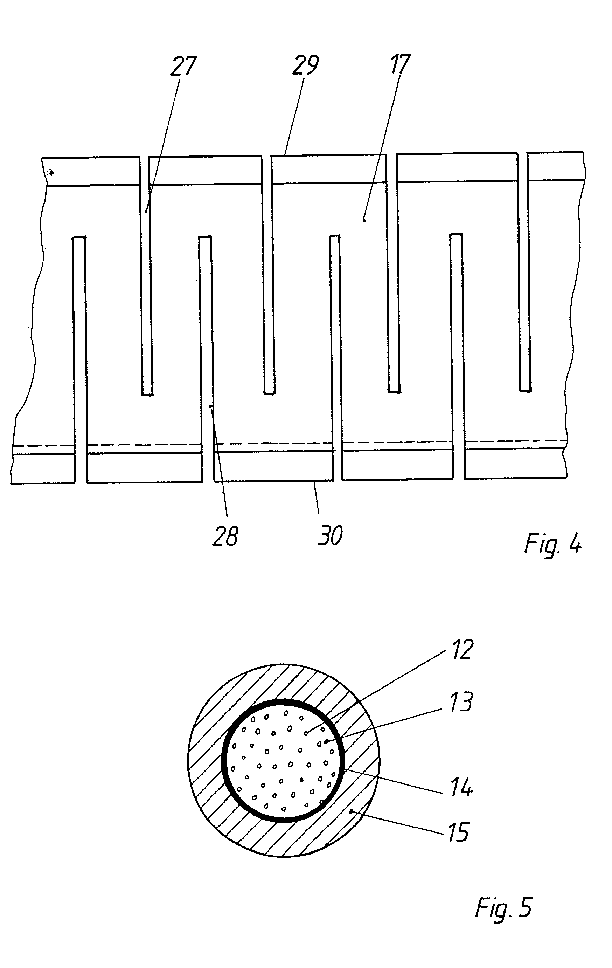

7. Die Wandung des Aluminiumgehäuses ist derart von Schlitzen durchzogen, dass Wirbelströme weitgehend vermieden werden. Beispielsweise kann ein zylindrisches Aluminiumgehäuse Schlitze aufweisen, die parallel zur Zylinderachse verlaufen und der Abwicklung der Gehäuseoberfläche eine mäanderförmige Gestalt geben (siehe Fig. 4).

Neben den die Flusspumpe betreffenden Ausgestaltungen der Erfindung wird durch eine weitere, vorteilhafte Weiterbildung der Erfindung vorgeschlagen, die Magnetspule durch einen Aluminiumzylinder aus Reinstaluminium zu umgeben. Diese Massnahme kann die Aufgabe der Erfindung unterstützen. Wegen des hohen Betriebsstromes ergibt sich eine optimal hohe Stromdichte in der Magnetspule, wodurch das Spulengewicht minimiert ist. Eine Nb$_3$Sn-Spule wird beispielsweise nach dem «Wind and react»-Verfahren (Wickeln des Spulendrahtes, Glühen und Überführen in die supraleitende Legierung) hergestellt und vakuumimprägniert, wobei die Spule mit einem Zylinder aus Reinstaluminium umgeben wird.

Ferner wird der Aluminiumzylinder in vorteilhafter Weise durch Auswahl der Form und/oder der Legierung gemäss dem «quench-tube»-Prinzip ausgelegt. Das Quench-tube-Prinzip ist in IEEE Transactions on Magnetics, Vol. MAG 17, September 1981, p. 1793 beschrieben. Gemäss diesem Prinzip werden beim Auferregen der Spule im Aluminiumzylinder keine unzulässigen Ströme induziert, während bei der schnellen Stromänderung beim «quench» der Aluminiumzylinder wie die Sekundärspule eines Transformators wirkt und durch Aufnahme der aus der Magnetspule verdrängten Energie diese vor Überhitzung schützt. Der elektrische Widerstand des Aluminiumzylinders darf einerseits nicht zu klein sein, da sonst im Aluminiumzylinder Strom beim Auferregen der Magnetspule fliesst. Andererseits darf er auch nicht zu gross sein, da sonst die erforderliche «quench»-Sicherheit nicht gewährleistet ist. Bei der Auswahl der Form des Aluminiumzylinders kann einerseits die Wandstärke und/oder die Legierung des Zylinders entsprechend eingestellt werden, andererseits kann der Aluminiumzylinder auch Ausnehmungen, wie z.B. Schlitze, aufweisen, die zu einer Verlängerung der Leiterbahn für den induzierten Strom führen.

Durch die Auslegung des Aluminiumzylinders als «quench-tube» kann auf die Kupferbeschichtung des Spulendrahtes wenigstens teilweise verzichtet werden, da die «quench»-Sicherheit nun weitgehend durch den Aluminiumzylinder übernommen wird. Hierdurch kann das Spulengewicht weiter reduziert werden, ohne dass gleichzeitig die Stromdichte herabgesetzt werden müsste.

In vorteilhafter Weise ist der Kälteschild des Kryostaten, in dem die Magnetspule und/oder die Flusspumpe angeordnet ist, thermisch gut leitend mit der ersten Stufe des Kryogenerators verbunden.

Falls der Kaltkopf des Kryogenerators die Last der Spule nicht allein tragen kann, ist es vorteilhaft, eine zusätzliche Spulenaufhängung aus thermisch schlecht leitendem Material vorzusehen. Derartiges Material sind beispielsweise Titandrähte oder -bänder oder Glosrowing.

Weiter ist es möglich, den Kryogenerator und die Flusspumpe im Bereich ausserhalb der zylindrischen Bohrung der Magnetspule anzuordnen. Gemäss dem Stand der Technik (IEEE Transactions on Magnetics, Vol. MAG 19, No. 3, May 83, p. 880 bis 883) ist der Kaltkopf des Kryogenerators in der Spulenmitte angeordnet, so dass dieser Raum als Nutzvolumen nicht mehr zur Verfügung steht. Viele Anwendungen brauchen aber den Innenraum der Spule als Nutzvolumen. Diese Forderung kann durch die genannte Ausgestaltung der Erfindung erfüllt werden. Kryogenerator und Flusspumpe können beispielsweise an der Zylinderaussenfläche des Aluminiumzylinders der Magnetspule angeflanscht sein. Als Ausführungsvariante hierzu kann die Flusspumpe mit Transformator und Schaltern auch an einem Ende (Stirnseite) des Aluminiumzylinders als Verlängerung der Magnetspule angeordnet sein, wobei in diesem Bereich der Aluminiumzylinder zur Vermeidung von Wirbelströmen axial geschlitzt ist.

Anhand der Zeichnung, in der ein Ausführungsbeispiel der Erfindung gezeigt ist, sollen die Erfindung sowie weitere vorteilhafte Ausgestaltungen und Weiterbildungen näher erläutert und beschrieben werden. Es zeigt:

Fig. 1 eine schematische Darstellung eines supraleitenden Magnetsystems mit Flusspumpe und Kryogenerator im Längsschnitt,

Fig. 2 eine Anordnung gemäss Fig. 1 im Quer-schnitt längs der Schnittlinie II–II,

Fig. 3 ein Detail gemäss Fig. 1, das die Anordnung der Flusspumpe zeigt,

Fig. 4 die Abwicklung eines geschlitzten Aluminiumgehäuses,

Fig. 5 den Querschnitt eines Supraleitungs-drahtes aus $Nb_3Sn$-Filamenten mit Kupferstabili-sierung und

Fig. 6 das Ersatzschaltbild für eine Flusspumpenanordnung.

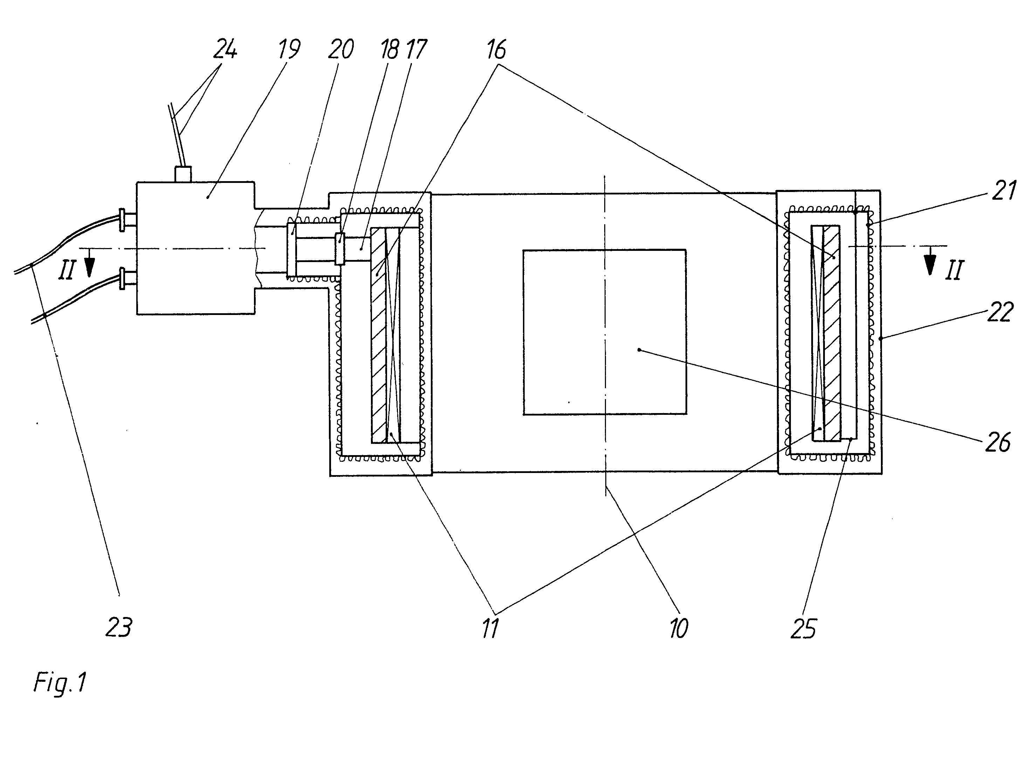

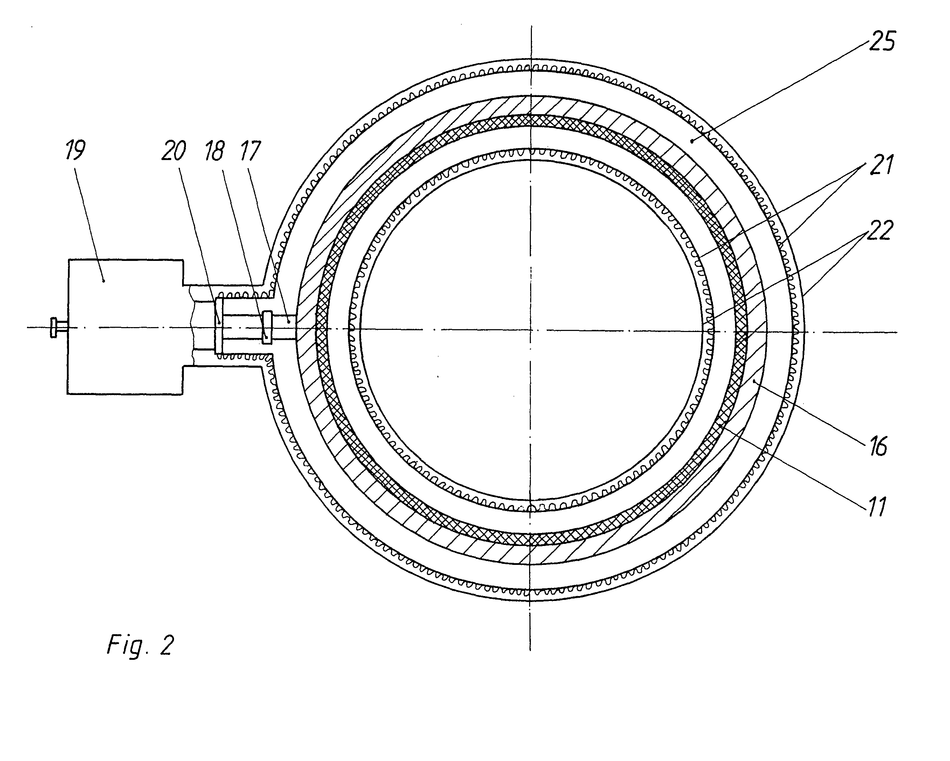

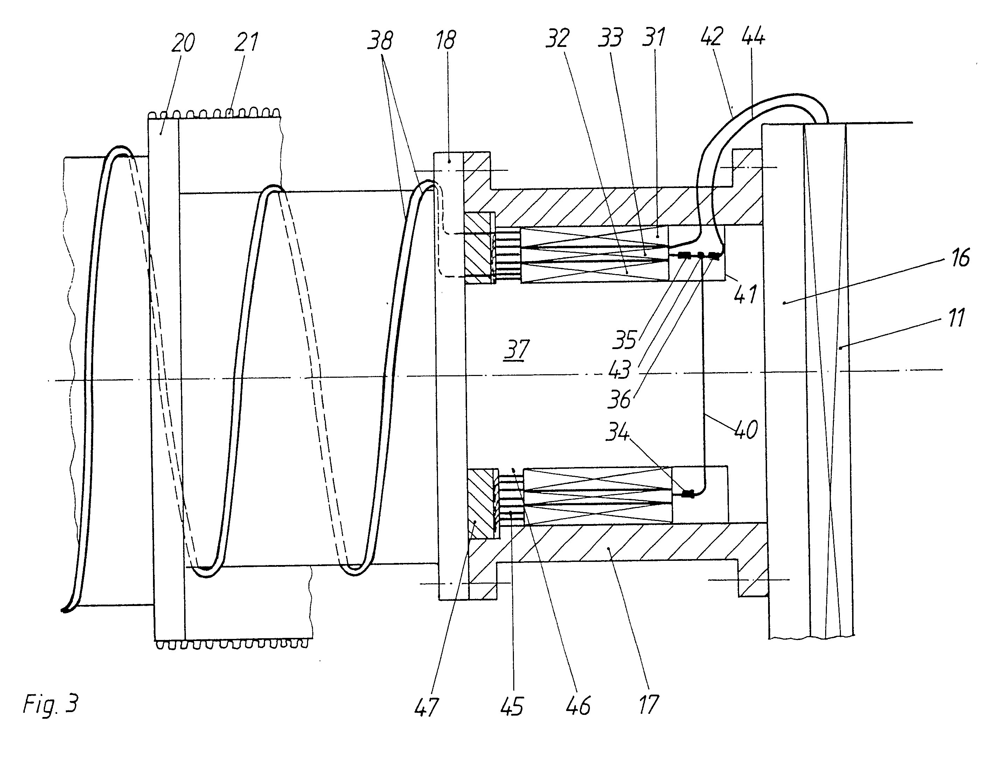

In Fig. 1 und 2 ist schematisch ein supraleitendes Magnetsystem mit Flusspumpe und Kryogenerator dargestellt. In Fig. 1 werden die Spulenanordnung und die Flusspumpe in einem Längsschnitt gezeigt, während der Kryogenerator lediglich in Seitenansicht abgebildet ist.

Um eine Spulenachse 10 ist eine vakuumim-prägnierte Magnetspule 11 aus $Nb_3Sn$-Leitern konzentrisch angeordnet. Ein Leiterquerschnitt des Spulendrahtes ist der Fig. 5 entnehmbar. Die Fig. 5 zeigt $Nb_3Sn$-Filamente 12, die in Bronze 13 eingebettet sind. Die Bronze 13 ist durch eine Tantalschicht 14 (Tantalbarriere) umgeben, welche ihrerseits durch eine Kupferschicht 15 abgedeckt ist. Die Tantalbarriere soll beim Glühen des supraleitenden Drahtes während dessen Herstel-lungsverfahrens verhindern, dass die Kupfer-schicht 15 (hochreines Kupfer), welche der Stabilisierung des Supraleiters dient, durch Diffusion aus dem aktiven Teil des Supraleiters (Bronze) verunreinigt wird.

Gemäss Fig. 1 ist die Magnetspule 11 von einem Aluminiumzylinder 16 aus hochleitfähigem Aluminium umgeben. Der Aluminiumzylinder 16 ist thermisch gut leitend mit der Magnetspule 11 verbunden und trägt das Gewicht der Magnetspule 11. Im oberen Bereich des Aluminiumzylinders 16 ist an dessen Aussenfläche das Gehäuse 17 einer Flusspumpe angeflanscht. Das Gehäuse 17 der Flusspumpe ist seinerseits mit der zweiten Stufe 18 des Kaltkopfes 19 eines Kryogenerators verbunden. Die erste Stufe 20 des Kryogenerators ist thermisch an ein Kälteschild 21 gekoppelt, welches sowohl die Flusspumpe als auch die Magnetspule 11 allseits umgibt. Die Magnetspule 11, die Flusspumpe und der Kaltkopf 19 des Kryogenerators sind durch einen Vakuumbehälter 22 umgeben. Aus dem Gehäuse des Kaltkopfes 19 treten zwei Heliumdruckleitungen 23 aus, die den Kaltkopf 19 mit einem nicht dargestellten Kompressor verbinden. Ferner treten aus dem Kaltkopfgehäuse zwei Stromleitungen 24 aus, die zur Stromeinspeisung bei der Auferregung der Magnetspule 11 dienen. Die Steuerleitungen für die supraleitenden Schalter der Flusspumpe sind nicht dargestellt.

Der Aluminiumzylinder 16 und die Magnetspule 11 werden auf einer Seite mechanisch durch den Kaltkopf 19 getragen. Zur Abstützung der anderen Seite sind zwei Titanbänder 25 vorgesehen, durch die der Aluminiumzylinder 16 am Vakuumbehälter 22 aufgehängt ist. Die Titanbänder sind thermisch schlecht leitend. Sie sind am unteren Teil des Aluminiumzylinders 16 befestigt, um durch eine grosse Länge einen Wärmeübergang zwischen Aluminiumzylinder 16 und Vakuumbehälter 22 zu erschweren. Das Magnetsystem weist eine zylindrische Bohrung auf, welche als magnetisches Nutzvolumen 26 genutzt werden kann.

Aus Fig. 3 ist ein vergrösserter Ausschnitt ge-mäss Fig. 1 entnehmbar, der den Bereich der Flusspumpe darstellt. Die Flusspumpe ist in einem Aluminiumgehäuse 17 untergebracht, welches an den Aluminiumzylinder 16, der die Magnetspule 11 trägt, angeflanscht ist. Das Aluminiumgehäuse 17 ist zylindrisch ausgebildet. Um das Auftreten von Wirbelstromverlusten im Aluminiumgehäuse 17 zu vermeiden, ist dieses axial geschlitzt. Die Anordnung der Schlitze 27, 28 sind der Fig. 4, die eine Abbildung des Aluminiumgehäuses 17 zeigt, zu entnehmen. Die Schlitze 27, 28 gehen jeweils von den Stirnseiten 29, 30 des Aluminiumgehäuses aus.

Die Flusspumpe besteht aus einer Primärwicklung 31, 32, einer Sekundärwicklung 33 sowie drei supraleitenden Schaltern 34, 35, 36. Die Wicklungen 31, 32, 33 sind um einen zylinderförmigen Wickelkörper 37 gewickelt. Die Primärwicklung 31, 32 ist zweiteilig ausgeführt, und die Sekundärwicklung 33 liegt in einer neutralen Zone der Primärwicklung 31, 32 als Wickelzwischenlage. Die Primärwicklung 31, 32 ist über Stromleitungen 38 mit einer nicht dargestellten Stromversorgung verbunden. Die Stromleitungen 38 sind auf die zweite Stufe 18 und erste Stufe 20 des Kaltkopfes 19 des Kryogenerators gewickelt und stehen mit diesem in gutem thermischem Kontakt. Die Primärwicklung 31, 32 ist aus sehr dünnem $Nb_3Sn$-Draht gefertigt.

Die Sekundärwicklung 33 des hierdurch gebildeten Transformators 31, 32, 33 weist neben ihren beiden Spulenendleitungen 40, 41 eine Mittelabgriffleitung 42 auf. Bei der einen Spulenendleitung 40 ist in einem Bereich die Kupferstabilisierung entfernt und durch ein elektrisch hochresitives Material ersetzt. Dieser Bereich ist durch einen nicht dargestellten Draht aus Konstantan, der als Heizwicklung dient, umgeben. Dieser Bereich ist somit als supraleitender Schalter 34 ausgebildet. In der anderen Spulenendleitung 41 sind zwei getrennte supraleitende Schalter 35, 36 angeordnet, die in gleicher Weise wie der supraleitende Schalter 34 ausgebildet sind. Die Spulenendleitung 40 ist an einer Kontaktstelle 43, die zwischen den beiden supraleitenden Schaltern 35 und 36 liegt, mit der Spulenendleitung 42 verbunden.

Die Sekundärwicklung 33 der Flusspumpe ist über das freie Ende 44 der Spulenendleitung 41 und die Mittelabgriffleitung 42 mit der Magnetspule 11 verbunden. Bei Herstellung der Magnetspule 11, der Sekundärwicklung 33 und der supraleitenden Schalter 34, 35, 36 sind lediglich zwei Kontaktstellen erforderlich. Die eine Kontaktstelle 43 befindet sich zwischen den beiden supraleitenden Schaltern 35 und 36, und die andere Kontaktstelle ist am Mittelabgriff der Sekundärwicklung 33 erforderlich. Im übrigen können die Magnetspule 11, die Sekundärwicklung 33 und die supraleitenden Schalter 34, 35, 36 aus einem durchgehenden supraleitenden Draht oder Seil mit Kupferstabilisierung hergestellt werden.

Zur Kühlung des Transformators 31, 32, 33, der aus Primärwicklung 31, 32 und Sekundärwicklung 33 besteht, sind zwischen die einzelnen Wicklungslagen axial ausgerichtete Kupferstäbe 45 miteingewickelt. Diese Kupferstäbe ragen aus einer Stirnseite des Transformators heraus und sind durch Ausnehmungen eines Flansches 46 des Wickelkörpers 37 hindurchgesteckt. Ausserhalb des Flansches 46 sind die Kupferstäbe 45 umgebogen und durch einen Andrückring 47 in thermischem Kontakt zu dem Aluminiumgehäuse 17 gebracht.

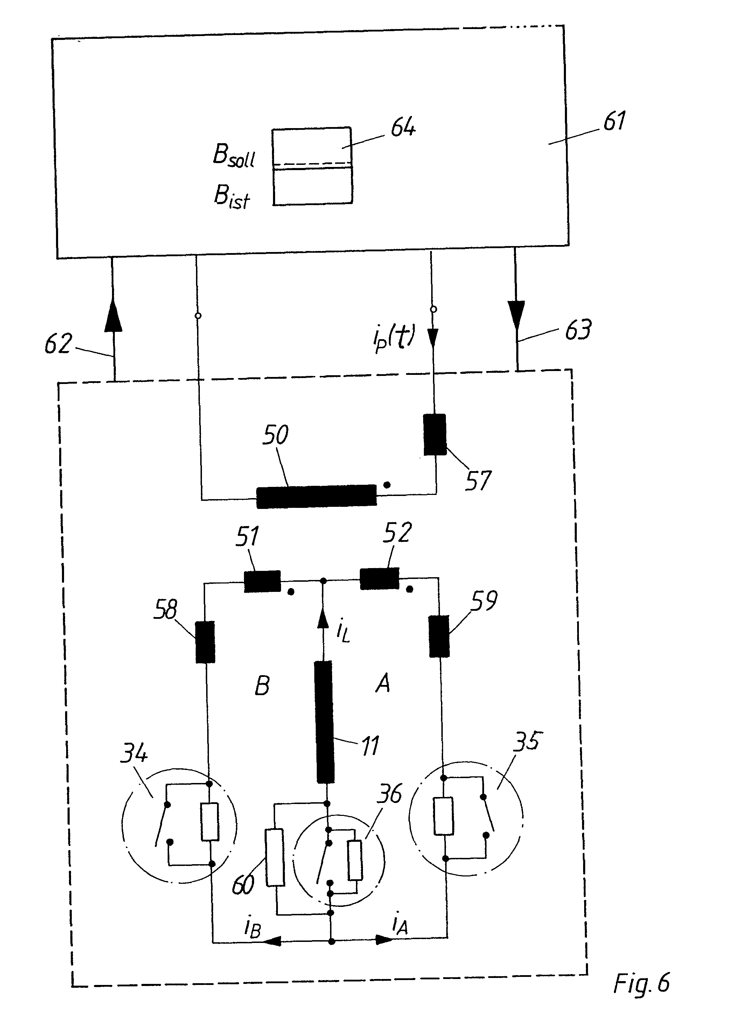

Die Fig. 6 zeigt ein Ersatzschaltbild der Flusspumpe. Flusspumpen dieser Art wurden beispielsweise in den beiden Aufsätzen in Cryogenics 21, Seiten 195 bis 206 und 267 bis 277 (1981) beschrieben. Die Flusspumpe besteht, wie schon aus Fig. 3 hervorgeht, im wesentlichen aus einem Transformator mit supraleitender Sekundärinduktivität 51, 52, drei supraleitenden Schaltern 34, 35, 36 und der supraleitenden Magnetspule (Lastinduktivität) 11. In dem Ersatzschaltbild gemäss Fig. 6 sind ferner die Streuinduktivitäten 57, 58, 59 der Primärinduktivität 50 und der Sekundärinduktivitäten 51, 52 dargestellt.

Die supraleitenden Schalter sind symbolisch dargestellt. Sie bestehen im wesentlichen aus einem supraleitenden Leiter, der durch eine Heizwicklung erwärmbar ist. Bei abgekühltem Leiter ist dieser supraleitend, bei erwärmtem Leiter ist er normalleitend und weist einen endlichen Widerstand auf.

Die beiden supraleitenden Schalter 34 und 35 dienen dem Hochpumpen des Lastromes $i_L$ der Lastinduktivität 11. Der supraleitende Schalter 36 ist ein Schutzelement für die Lastinduktivität 11. Er ist geschlossen, sofern die Lastinduktivität 11 vollständig im supraleitenden Zustand ist. Geht diese jedoch wenigstens teilweise in den Normalleitungszustand über, so wird der Schutzschalter 36 geöffnet (durch Heizen des entsprechenden Leiterabschnittes). Der Stromfluss im Kreis der Lastinduktivität 11 wird über den Schutzwiderstand 60 geleitet und durch diesen begrenzt, so dass eine Beschädigung der Lastinduktivität 11 durch Erwärmung des normalleitenden Bereiches vermieden wird.

Die Flusspumpe wird durch eine Steuereinrichtung 61 gesteuert. Die Steuereinrichtung 61 erfasst über Messwertleitungen 62 den Zustand der Flusspumpe (z.B. Temperatur, Laststrom $i_L$, Zustand der supraleitenden Schalter). Über Steuerleitungen 63 beeinflusst die Steuereinrichtung 61 die Flusspumpe, insbesondere die supraleitenden Schalter 34, 35, 36.

Über einen Einstellknopf 64 wird der Steuereinrichtung 61 ein für das Nutzvolumen 26 (Fig. 1) gewünschter Induktionssollwert $B_{soll}$ vorgegeben. Ferner wird in dem Nutzvolumen 26 der Induktionswert $B_{ist}$ gemessen und der Steuereinrichtung 61 zugeführt. Gemäss dem Soll-Ist-Vergleich wird der Primärstrom $i_p$ und der Zustand der supraleitenden Schalter 34, 35, 36 eingestellt.

## Patentansprüche

1. Supraleitendes Magnetsystem mit einer in einem Kryostat mit Kälteschild angeordneten, supraleitenden Magnetspule (11), deren Wicklung aus einem Material hoher kritischer Temperatur besteht, die einen konzentrischen Hohlraum besitzt und die ein zweistufiger Kryogenerator durch thermische Kopplung über feste Körper auf Betriebstemperatur kühlt, wobei diese Temperatur durch die zweite Stufe (18) des Kryogenerators bestimmt ist, dadurch gekennzeichnet, dass die Magnetspule (11) von einem Metallzylinder (16) umschlossen ist, mit dessen Aussenseite sowohl die zweite Stufe (18) des Kryogenerators, als auch eine die Magnetspule (11) speisende Flusspumpe thermisch leitend verbunden ist und die Flusspumpe ein Metallgehäuse (17) besitzt, in das ein Transformator mit einer supraleitenden Sekundärwicklung (33) und supraleitende Schalter (34, 35, 36) eingebaut sind und die Sekundärwicklung (33) des Transformators aus dem gleichen supraleitenden Draht oder Seil wie die Magnetspule (11) hergestellt ist und dass der Metallzylinder (16) und das Metallgehäuse (17) aus Material guter Temperaturleitfähigkeit, vorzugsweise Aluminium bestehen und das Metallgehäuse (17) zwischen der zweiten Stufe des Kryogenerators und dem Metallzylinder (16) angeordnet ist.

2. Magnetsystem nach Anspruch 1, dadurch gekennzeichnet, dass die Primärwicklung (31, 32) des Transformators aus sehr dünnem $Nb_3Sn$-Draht gefertigt ist.

3. Magnetsystem nach Anspruch 1 oder 2, dadurch gekennzeichnet, dass zwischen den Wicklungslagen der Primärwicklung (31, 32) und/oder Sekundärwicklung (33) Wärmedränagen (heat drains), insbesondere isolierte Kupferdrähte (45), gelegt sind, die thermisch an die zweite Stufe (18) des Kryogenerators angekoppelt sind.

4. Magnetsystem nach einem der Ansprüche 1 bis 4, dadurch gekennzeichnet, dass wenigstens einer der supraleitenden Schalter (34, 35, 36) aus dem gleichen supraleitenden Material wie die Magnetspule (11) hergestellt ist, wobei im Bereich des Schalters (34, 35, 36) das Stabilisierungskupfer entfernt (z.B. weggeätzt) ist und in diesem Bereich die Schalterheizung z.B. in Form einer Konstantanheizwicklung, angeordnet ist.

5. Magnetsystem nach Anspruch 4, dadurch gekennzeichnet, dass im Bereich des Schalters (34, 35, 36) das Stabilisierungskupfer durch elektrisch hochresistives Material zur Erhöhung der Wärmekapazität ersetzt ist.

6. Magnetsystem nach einem der Ansprüche 1 bis 5, dadurch gekennzeichnet, dass die Sekundärwicklung (33) und wenigstens ein supraleitender Schalter (34, 35, 36) der Flusspumpe aus einem durchgehenden supraleitenden Draht oder Seil gefertigt ist.

7. Magnetsystem nach einem der Ansprüche 1 bis 5, dadurch gekennzeichnet, dass die Sekundärwicklung (33), wenigstens ein supraleitender Schalter (34, 35, 36) der Flusspumpe und die Magnetspule (11) aus einem durchgehenden supraleitenden Draht oder Seil gefertigt sind.

8. Magnetsystem nach Anspruch 7, dadurch gekennzeichnet, dass die Wandung des Aluminiumgehäuses (17) von Schlitzen (27, 28) derart durchzogen ist, dass Wirbelströme weitgehend vermieden werden.

9. Magnetsystem nach einem der Ansprüche 1 bis 8, dadurch gekennzeichnet, dass die Magnetspule (11) durch einen Aluminiumzylinder (16) aus Reinstaluminium umgeben ist.

10. Magnetsystem nach Anspruch 9, dadurch gekennzeichnet, dass durch Auswahl der Form (z.B. Wahl der Wandstärke, Anordnung von Schlitzen) und/oder der Legierung des Aluminiumzylinders dieser gemäss dem Quench-tube-Prinzip ausgelegt ist.

11. Magnetsystem nach einem der Ansprüche 1 bis 10, dadurch gekennzeichnet, dass der Kälteschild (21) des Kryostaten thermisch gut leitend mit der ersten Stufe (20) des Kryogenerators verbunden ist.

12. Magnetsystem nach einem der Ansprüche 1 bis 11, dadurch gekennzeichnet, dass die Magnetspule (11) wenigstens teilweise durch eine Spulenaufhängung (25) aus thermisch schlecht leitendem Material in ihrer Lage gehalten wird.

**Claims**

1. Superconducting magnet system having a superconducting magnetic coil (11), which is arranged in a cryostat with cold shield, whose winding consists of a material with a high critical temperature, which has a concentric cavity, and which cools a two-stage cryogenerator to operating temperature by means of thermal coupling via rigid bodies, this temperature being determined by the second stage (18) of the cryogenerator, characterized in that the magnetic coil (11) is enclosed by a metal cylinder (16), with the outside of which both the second stage (18) of the cryogenerator and also a flow pump feeding the magnetic coil (11) are connected in a thermally-conducting fashion and the flow pump has a metal housing (17), in which there are installed a transformer with a superconducting secondary (33) and superconducting switches (34, 35, 36) and the secondary (33) of the transformer is made from the same superconducting wire or cable as the magnetic coil (11), and in that the metal cylinder (16) and the metal housing (17) consist of material of good thermal conductivity, preferably aluminium, and the metal housing (17) is arranged between the second stage of the cryogenerator and the metal cylinder (16).

2. Magnet system according to Claim 1, characterized in that the primary (31, 32) of the transformer is produced from very thin $Nb_3Sn$ wire.

3. Magnet system according to Claim 1 or 2, characterized in that heat drains, especially insulated copper wires (45), which are thermally coupled to the second stage (18) of the cryogenerator, are laid between the winding layers of the primary (31, 32) and/or secondary (33).

4. Magnet system according to one of Claims 1 to 4, characterized in that at least one of the superconducting switches (34, 35, 36) is made from the same superconducting material as the magnetic coil (11), the stabilizing copper being removed (for example, etched off) in the region of the switch (34, 35, 36), and the switch heater, for example in the form of a constantan filament winding being arranged in this region.

5. Magnet system according to Claim 4, characterized in that in the region of the switch (34, 35, 36), the stabilizing copper is replaced with material of high electric resistance in order to increase the thermal capacity.

6. Magnet system according to one of Claims 1 to 5, characterized in that the secondary (33) and at least one superconducting switch (34, 35, 36) of the flow pump are produced from a continuous superconducting wire or cable.

7. Magnet system according to one of Claims 1 to 5, characterized in that the secondary (33), at least one superconducting switch (34, 35, 36) of the flow pump, and the magnetic coil (11) are produced from a continuous superconducting wire or cable.

8. Magnet system according to Claim 7, characterized in that the wall of the aluminium housing (17) is traversed by slots (27, 28) in such a way that eddy currents can be largely avoided.

9. Magnet system according to one of Claims 1 to 8, characterized in that the magnetic coil (11) is surrounded by an aluminium cylinder (16) or superpure aluminium.

10. Magnet system according to Claim 9, characterized in that by selecting the form (for example choice of the wall thickness, arrangement of slots) and/or the alloy of the aluminium cylinder the latter is constructed according to the quench-tube principle.

11. Magnet system according to one of Claims 1 to 10, characterized in that the cold shield (21) of the cryostat is connected in a good thermally-conducting fashion to the first stage (20) of the cryogenerator.

12. Magnet system according to one of Claims 1 to 11, characterized in that the magnetic coil (11) is held in position at least partially by a coil suspension (25) of thermally poorly-conducting material.

**Revendications**

1. Système magnétique supraconducteur comprenant une bobine excitatrice supraconductrice (11) qui est disposée dans un cryostrat avec écran thermique, dont l'enroulement est réalisé en un matériau de haute température critique, qui comprend une cavité concentrique et qu'un générateur cryogénique à deux étages refroidit à la température de service par accouplement thermique à l'aide de corps solides, cette température étant déterminée par le second étage (18) du générateur cryogénique, caractérisé par le fait que la bobine excitatrice (11) est entourée par un cylindre métallique (16) à la surface extérieure duquel sont thermiquement raccordés aussi bien le second étage (18) du générateur cryogénique qu'une pompe alimentant la bobine excitatrice (11), que la pompe comporte un corps métallique (17) dans lequel sont logés un transformateur à enroulement secondaire supraconducteur (33) et des interrupteurs supraconducteurs (34, 35, 36), que l'enroulement secondaire (33) du transformateur est constitué par le même fil métallique ou câble supraconducteur que la bobine excitatrice (11), que le cylindre métallique (16) et le corps métallique (17) sont réalisés en un matériau de bonne conductibilité thermique, de préférence en aluminium, et que le corps métallique (17) est interposé entre le second étage du générateur cryogénique et le cylindre métallique (16).

2. Système magnétique selon la revendication 1, caractérisé par le fait que l'enroulement primaire (31, 32) du transformateur est fabriqué en un fil métallique très mince en $Nb_3Sn$.

3. Système magnétique selon la revendication 1 ou 2, caractérisé par le fait qu'entre les couches de l'enroulement primaire (31, 32) et/ou de l'enroulement secondaire (33), sont insérés des drains thermiques (heat drains), en particulier des fils de cuivre isolés (45), qui sont thermiquement accouplés au second étage (18) du générateur cryogénique.

4. Système magnétique selon l'une des revendications 1 à 4, caractérisé par le fait qu'au moins l'un des interrupteurs supraconducteur (34, 35, 36) est réalisé dans le même matériau supraconducteur que la bobine excitatrice (11), le cuivre de stabilisation étant enlevé (par exemple par attaque à l'acide) dans la zone de l'interrupteur (34, 35, 36) et le chauffage des interrupteurs, par exemple sous la forme d'un enroulement de chauffage en constantan, étant disposé dans cette zone.

5. Système magnétique selon la revendication 4, caractérisé par le fait que, dans la zone de l'interrupteur (34, 35, 36), le cuivre de stabilisation est remplacé par un matériau de grande résistivité pour augmenter la capacité thermique.

6. Système magnétique selon l'une des revendications 1 à 5, caractérisé par le fait que l'enroulement secondaire (33) et au moins un interrupteur supraconducteur (34, 35, 36) de la pompe est fabriqué en un fil métallique ou câble supraconducteur continu.

7. Système magnétique selon l'une des revendications 1 à 5, caractérisé par le fait que l'enroulement secondaire (33), au moins un interrupteur supraconducteur (34, 35, 36) de la pompe et la bobine excitatrice (11) sont réalisés en un fil métallique ou câble supraconducteur continu.

8. Système magnétique selon la revendication 7, caractérisé par le fait que la paroi du corps (17) en aluminium est munie de fentes (27, 28) pour réduire au maximum les courants parasites.

9. Système magnétique selon l'une des revendications 1 à 8, caractérisé par le fait que la bobine excitatrice (11) est entourée par un cylindre (16) en aluminium extra pur.

10. Système magnétique selon la revendication 9, caractérisé par le fait que par le choix de la forme (par exemple choix de l'épaisseur de paroi, de la disposition des fentes) et/ou de l'alliage du cylindre en aluminium, celui-ci est réalisé selon le principe du quench-tube.

11. Système magnétique selon l'une des revendications 1 à 10, caractérisé par le fait que l'écran thermique (21) du cryostat est raccordé, avec bonne conductibilité thermique au premier étage (20) du générateur cryogénique.

12. Système magnétique selon l'une des revendications 1 à 11, caractérisé par le fait que la bobine excitatrice (11) est maintenue en position au moins en partie par une suspension (25) en matériau de mauvaise conductibilité thermique.

Fig.1

EP 0154 779 B1

25

21

22

16

11

17

18

20

19

Fig. 2

Fig. 3

EP 0 154 779 B1

27    29    17

*Fig. 4*

28    30

12

13

14

15

*Fig. 5*

Fig. 6